# FASCICULE DE BREVET EUROPEEN

(11) **EP 2 643 574 B1**
(45) Date de publication et mention de la délivrance du brevet: **21.11.2018**
(21) Numéro de dépôt: 11799761.9
(22) Date de dépôt: 21.11.2011
(51) Int. Cl.: F02C 7/22, F02C 9/26, B01D 35/143

(54) **SURVEILLANCE D'UN FILTRE DU CIRCUIT D'ALIMENTATION EN CARBURANT D'UN MOTEUR D'AÉRONEF.**
ÜBERWACHUNG EINES FILTERS EINES KRAFTSTOFFVERSORGUNGSSYSTEMS EINES FLUGZEUGTRIEBWERKS
MONITORING A FILTER OF A FUEL SUPPLY SYSTEM OF AN AIRCRAFT ENGINE

(30) Priorité: 26.11.2010 FR 1059797
(43) Date de publication de la demande: 02.10.2013
(73) Titulaire: Safran Aircraft Engines, 75015 Paris (FR)
(72) Inventeur: FLORENTIN, Kim, 75013 Paris (FR); SOYAH, Karim, 75014 Paris (FR)
(74) Mandataire: David, Alain
(86) Numéro de dépôt international: PCT/FR2011/052710
(87) Numéro de publication internationale: WO 2012/069745

(56) Documents cités:
- EP-A2- 1 061 243
- FR-A1- 2 705 734
- FR-A1- 2 944 216
- GB-A- 881 002

## Description

### Arrière-plan de l'invention

L'invention concerne le domaine général de l'aéronautique. En particulier, l'invention se rapporte à la surveillance d'un filtre du circuit d'alimentation en carburant d'un moteur d'aéronef.

De façon connue, le circuit d'alimentation en carburant d'un moteur d'aéronef est équipé d'un filtre qui capture les particules présentes dans le carburant grâce à un élément filtrant poreux. Cette capture entraîne une modification de la porosité de l'élément filtrant qui se traduit, à conditions de fonctionnement constantes, par une augmentation de la pression différentielle à travers le filtre en fonction du temps.

Ce phénomène, appelé colmatage, augmente la résistance du filtre au passage du carburant. Ceci peut prendre plus ou moins de temps en fonction de l'exposition du filtre à la pollution. Le colmatage provoqué par les particules présentes de le carburant est appelé colmatage normal ou colmatage extrême, en fonction du taux et du type des particules.

En cas de colmatage normal ou extrême, il convient de remplacer l'élément filtrant du filtre. Ainsi, il est connu de mesurer la perte de charge du filtre avec un capteur de pression différentiel pour détecter un colmatage. Lorsque la perte de charge du filtre dépasse une certaine limite, appelée seuil de pré-colmatage, le système est programmé pour envoyer une alarme indiquant la nécessité d'une opération de maintenance.

D'autre part, il est également connu d'ouvrir un conduit de dérivation qui court-circuite le filtre lorsqu'un colmatage est détecté, pour permettre au carburant de continuer à circuler dans le circuit. L'ouverture se fait automatiquement dès que la pression différentielle aux bornes du filtre dépasse un certain seuil (seuil d'ouverture by-pass) supérieur au seuil qui déclenche l'envoi de l'alarme de pré-colmatage. En cas d'ouverture du conduit de dérivation, le circuit est soumis à la pollution en aval du filtre et une opération de maintenance plus lourde doit être effectuée, par exemple la dépose du moteur et le nettoyage du circuit de carburant.

Le document FR 2 705 734 décrit un procédé de surveillance de ce type, dans lequel un message d'alarme est envoyé lorsque la perte de charge du filtre, corrigée par le débit de carburant, dépasse un seuil prédéterminé. Le document FR 2 944 216 propose une étape d'émission d'un signal indiquant un état de givrage et d'un signal indiquant un besoin de maintenance du filtre.

Par ailleurs, la présence d'eau dans le circuit d'alimentation en carburant est difficilement évitable. Or, pour un aéronef, la pression et la température rencontrées au cours d'un vol peuvent provoquer le passage de l'eau à l'état solide. Dans de telles conditions givrantes, le colmatage du filtre peut aussi être provoqué par le givre.

Or, les techniques de l'art antérieur précité ne permettent pas de différencier entre un colmatage normal, un colmatage extrême et un colmatage par le givre. Une alarme est donc générée même en cas de colmatage par le givre, ce qui a pour conséquence la réalisation d'une opération de maintenance systématique, alors qu'une telle opération n'est pas nécessaire en cas de colmatage par le givre.

### Obiet et résumé de l'invention

L'invention propose un procédé de surveillance d'un filtre du circuit d'alimentation en carburant d'un moteur d'aéronef, comprenant :
- une étape de détection d'un colmatage du filtre, et
- une étape d'envoi d'un message d'indication indiquant une nécessité d'une opération de maintenance, caractérisé en ce qu'il comprend :
- une étape de définition d'une pluralité de phases successives d'une mission de l'aéronef, comprenant au moins une première phase pendant laquelle le colmatage du filtre n'est pas susceptible d'être causé par le givre et une deuxième phase pendant laquelle le colmatage du filtre est susceptible d'être causé par le givre,
- une étape de détermination d'une phase courante parmi ladite pluralité de phases successives, et
- en réponse à la détection d'un colmatage du filtre, une étape de détermination d'un type de colmatage en fonction de ladite phase courante permettant de différencier entre un colmatage normal, un colmatage extrême et un colmatage par le givre, dans lequel, lors de l'étape d'envoi d'un message d'indication, le message envoyé indique la nécessité de maintenance, si le type de colmatage déterminé dans ladite phase courante est un colmatage normal ou extrême.

Autrement dit, l'invention propose de détecter le type de colmatage et d'adapter le message d'indication au type de colmatage détecté. Selon l'invention, la détection du type de colmatage est réalisée en fonction d'une phase courante d'une mission de l'aéronef, ce qui permet de détecter de manière fiable le type de colmatage.

Selon un mode de réalisation, lorsque la phase courante est une phase pendant laquelle le colmatage du filtre est susceptible d'être causé par le givre, l'étape de détermination comprend une étape de test de conditions givrantes.

Dans ce cas, le procédé de surveillance peut comprendre, après ladite étape de test de conditions givrantes, si lesdites conditions givrantes sont vérifiées, une étape de mesure d'une durée de détection pendant laquelle un colmatage est détecté. Ainsi :
- si la durée détection est supérieure à une durée de temporisation prédéterminée, le type de colmatage déterminé est un colmatage extrême et le message d'indication envoyé indique une nécessité de maintenance,
- si la durée de détection est inférieure à la durée de temporisation, le type de colmatage déterminé est un colmatage par le givre et aucun message d'indication indiquant une nécessité de maintenance n'est envoyé.

Dans ce cas également, selon une variante, après ladite étape de test de conditions givrantes, si lesdites conditions givrantes ne sont pas vérifiées, le type de colmatage déterminé est un colmatage extrême et le message d'indication envoyé indique une nécessité de maintenance.

Grâce aux différentes caractéristiques précitées, il est possible de différencier un colmatage provoqué par le givre d'un colmatage extrême. En cas de colmatage extrême, un message d'indication est envoyé pour indiquer qu'une maintenance est nécessaire. Par contre, en cas de colmatage par le givre, soit aucun message n'est envoyé soit un message d'indication spécifique au colmatage par le givre est envoyé. Cela permet d'éviter une opération de maintenance non nécessaire. En particulier, en l'absence d'ouverture d'un conduit de dérivation ou dans le cas d'un aéronef dans lequel le circuit aval au filtre peut supporter une ouverture du conduit de dérivation en conditions givrantes, il n'est pas nécessaire de réaliser une opération de maintenance lorsqu'un colmatage par le givre est détecté.

Selon un mode de réalisation, lorsque la phase courante est une phase pendant laquelle le colmatage du filtre n'est pas susceptible d'être causé par le givre, le type de colmatage déterminé est un colmatage normal ou extrême et le message d'indication envoyé indique une nécessité de maintenance.

L'étape de détermination d'une phase courante peut comprendre au moins une étape de test de condition de passage vers une phase suivante.

Les phases successives peuvent comprendre une première phase pendant laquelle l'avion est au sol avant le décollage, une deuxième phase pendant laquelle l'avion décolle, une troisième phase pendant laquelle l'avion est en vol, et une quatrième phase pendant laquelle l'avion est au sol après atterrissage.

L'invention fournit également un programme d'ordinateur comprenant des instructions pour l'exécution d'un procédé de surveillance conforme à l'invention lorsque le programme est exécuté par un ordinateur.

L'invention propose aussi une unité électronique pour la commande d'une turbomachine, ladite unité électronique comprenant une mémoire contenant un programme d'ordinateur conforme à l'invention.

Cette unité électronique peut être par exemple le calculateur de la turbomachine ou une unité spécifique à la surveillance du filtre.

L'invention concerne également un moteur d'aéronef comprenant une turbomachine et une unité électronique conforme à l'invention.

### Brève description des dessins

L'invention sera mieux comprise à la lecture de la description faite ci-après, à titre indicatif mais non limitatif, en référence aux dessins annexés sur lesquels :
- la figure 1 est un schéma du circuit d'alimentation en carburant d'une turbomachine et de l'unité électronique de commande de la turbomachine ;
- la figure 2 est un graphe illustrant le régime d'une turbomachine en fonction du temps, au cours d'une mission d'un aéronef ; et
- les figures 3A et 3B représentent un organigramme d'un procédé de surveillance selon un mode de réalisation de l'invention.

### Description détaillée d'un mode de réalisation

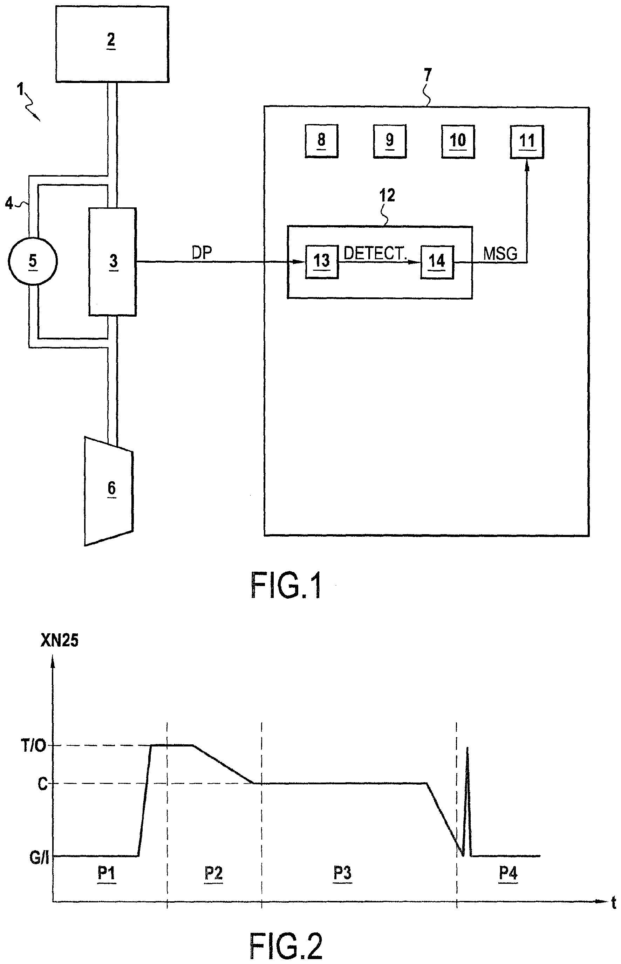

La **figure 1** représente un circuit d'alimentation 1 en carburant d'une turbomachine de moteur d'avion, et une unité électronique 7.

Le circuit d'alimentation 1 comprend un réservoir 2, un filtre 3 et un conduit de dérivation 4 équipé d'une vanne 5. Il est destiné à alimenter en carburant la chambre de combustion 6 de la turbomachine.

De manière connue, la vanne 5 s'ouvre automatiquement lorsque la pression différentielle à travers le filtre dépasse un seuil prédéterminé, dit seuil d'ouverture by-pass.

L'unité électronique 7 présente l'architecture matérielle d'un ordinateur. Elle comprend notamment un processeur 8, une mémoire morte 9, une mémoire vive 10 et une interface 11. Le processeur 8 permet d'exécuter des programmes d'ordinateurs mémorisés dans la mémoire morte 9 en utilisant la mémoire vive 10. L'interface 11 permet notamment d'obtenir des signaux de mesure et d'émettre signaux de commande et des messages.

L'unité électronique 7 met en oeuvre un procédé de surveillance du filtre 3. Ce procédé de surveillance peut être mis en oeuvre par un programme d'ordinateur 12 mémorisé dans la mémoire morte 9 et exécuté par le processeur 8. Le procédé de surveillance vise à détecter un colmatage du filtre 3, à émettre un message indiquant la nécessité d'une opération de maintenance en cas de colmatage, et à détecter l'ouverture de la vanne 5. L'unité électronique 7 peut être par exemple le calculateur de la turbomachine ou une unité électronique spécifique à la surveillance du filtre 3.

Plus précisément, le programme 12 comprend un premier module 13 chargé de détecter un colmatage et un deuxième module 14 chargé de déterminer le type de colmatage et d'émettre un message d'indication en fonction du type de colmatage.

Le premier module 13 détecte un colmatage du filtre 3 notamment en fonction da la pression différentielle DP, ou perte de charge, à travers le filtre 3. A cet effet, l'unité électronique 7 obtient un signal de mesure représentatif de la pression différentielle DP, par exemple provenant d'un capteur de pression différentielle de type jauge de contraintes. Le premier module 13 prend en compte une marge de sécurité pour que, en l'absence de détection de colmatage lors du décollage de l'avion, il soit possible d'assurer une mission complète de l'avion avec une contamination normale.

L'homme du métier est capable de réaliser un tel module 13 sans en nécessiter une description plus détaillée. Par exemple, comme dans le document cité en introduction, le colmatage est détecté lorsque la pression différentielle DP, corrigée par le débit de carburant, dépasse un seuil prédéterminé, appelé seuil de pré-colmatage. Le seuil de pré-colmatage peut être choisi pour permettre de terminer la mission de l'aéronef sans atteindre un niveau de colmatage inacceptable. En variante, d'autres techniques de détection du colmatage peuvent être utilisées.

Le premier module 13 fournit au deuxième module 14 un signal binaire DETECT. qui vaut par exemple 1 lorsqu'un colmatage est détecté et 0 lorsqu'aucun colmatage n'est détecté.

Dans une variante, le module 13 détecte également l'ouverture de la vanne 5. Dans ce cas, le module 13 fournit en outre un signal binaire indiquant au module 14 si la vanne 5 est ouverte.

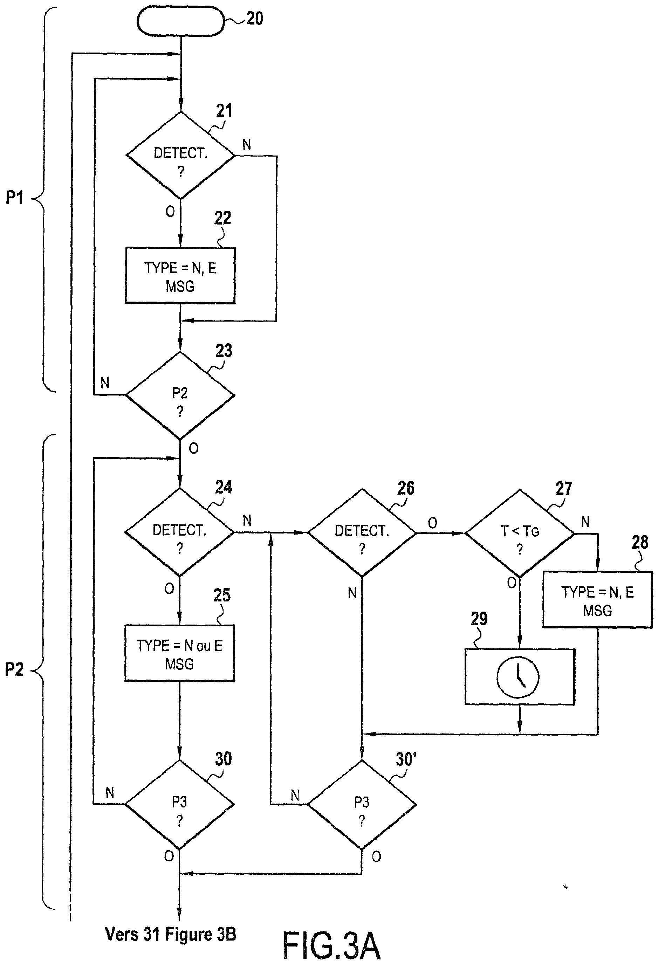

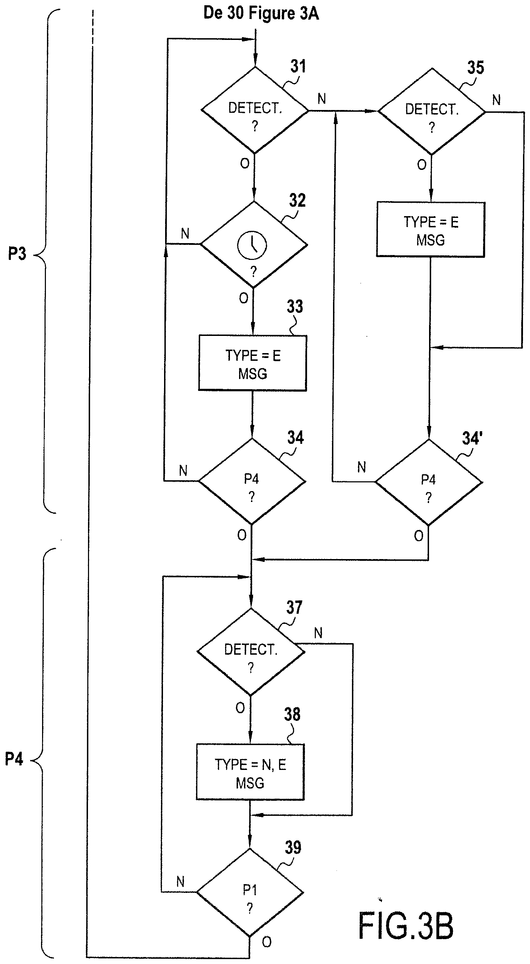

Le deuxième module 14 détermine une phase courante de la mission de l'aéronef et détermine le type de colmatage en fonction de la phase courante. Les phases successives de la mission de l'avion sont décrites ci-après en référence à la figure 2, et la détermination du type de colmatage est décrite ci-après en référence à la figure 3.

La **figure 2** est un graphe qui représente le régime de la turbomachine en fonction du temps t, au cours d'une mission de l'aéronef. Dans cet exemple, le régime considéré est le régime XN25 mais une autre donnée représentative du régime de la turbomachine pourrait être utilisée. La figure 2 montre que la mission de l'aéronef est décomposée en quatre phases successives, notées respectivement P1, P2, P3 et P4.

Au cours de la phase P1, l'avion est au sol. Le moteur initialement à l'arrêt démarre puis tourne au régime de ralenti au sol, noté G/I (pour « *Ground Idle* »). Ensuite, le régime augmente rapidement jusqu'au régime de décollage, noté T/O (pour « *Take Off*»).

Durant cette phase P1, le colmatage n'est pas susceptible d'être provoqué par le givre. En effet, même en cas de conditions givrantes, le débit de carburant circulant dans le filtre 3 pendant la période transitoire de démarrage est limité. La masse de glace injectée dans le filtre 3 pendant cette période transitoire de démarrage n'est donc pas suffisante pour colmater le filtre, à moins qu'il soit déjà à un stade de colmatage avancé. Ensuite, au régime ralenti sol G/I, le moteur est chaud et la température du carburant dans le filtre 3 est positive, ce qui a pour effet de faire fondre la glace éventuellement présente. Enfin, la durée entre le passage au régime de décollage T/O et le début de la phase P2 est trop courte pour cumuler suffisamment de glace dans le filtre.

Par contre, un colmatage normal ou un colmatage extrême peut être provoqué par de la pollution pendant la phase P1 et détecté par le module 13. En effet, lors du passage du régime ralenti au sol au régime de décollage, l'augmentation du débit de carburant circulant dans le filtre 3 a pour effet d'augmenter la perte de charge du filtre 3, ce qui peut amener à une détection de colmatage.

Par ailleurs, si aucun colmatage n'est détecté pendant la phase P1, alors un colmatage détecté pendant les phases suivantes P2 et P3 n'est pas un colmatage normal. En effet, comme expliqué précédemment, le premier module 13 tient compte d'une marge de sécurité permettant, en l'absence de détection de colmatage lors du décollage de l'avion, d'assurer une mission complète de l'avion avec une contamination normale.

Pendant la phase P2, le moteur tourne au régime de décollage T/O et l'avion décolle. Puis le régime diminue progressivement jusqu'à atteindre le régime de croisière, noté C (pour « Croisière » ou « *Cruise* »).

Comme expliqué précédemment, un colmatage détecté pendant la phase P2 n'est pas un colmatage normal. En l'absence de conditions givrantes, il s'agit donc d'un colmatage extrême. En présence de conditions givrantes, il s'agit d'un colmatage extrême ou d'un colmatage par le givre et la distinction entre les deux cas est réalisée au cours de la phase P3.

Pendant la phase P3, l'avion est en vol et le moteur tourne au régime de croisière C. Puis, en fin de phase P3, l'avion entame sa descente et le régime du moteur diminue progressivement.

Comme expliqué précédemment, un colmatage détecté pendant la phase P3 n'est pas un colmatage normal. Par ailleurs, pendant le vol en régime croisière, la température du carburant augmente progressivement. Ainsi, un colmatage par le givre ne peut pas apparaître pendant la phase P3. Un colmatage qui apparaît pendant la phase P3 est donc un colmatage extrême.

Si un colmatage a été détecté pendant la phase P2 et se maintient pendant la phase P3 malgré l'augmentation de la température du carburant, c'est qu'il s'agit également d'un colmatage extrême.

Par contre, si un colmatage a été détecté pendant la phase P2 puis n'est plus détecté pendant la phase P3 en raison de l'augmentation de la température du carburant, c'est qu'il s'agissait d'un colmatage par le givre.

Pendant la phase P4, l'avion a atterri et est au sol. Au début de la phase P4, le régime augmente brusquement pendant l'actionnement des inverseurs de poussées. Puis, le moteur tourne au régime de ralenti au sol G/I.

Comme lors de la phase P1, l'augmentation de régime pendant l'actionnement des inverseurs de poussée provoque une augmentation de la perte de charge du filtre 3, ce qui peut conduire à la détection d'un colmatage normal ou extrême par le module 13.

Les **figures 3A** **et** **3B** représentent, sous forme d'organigramme, les étapes du procédé de surveillance mis en oeuvre par le deuxième module 14.

Les étapes 21 à 23 correspondent à la phase P1. Le module 14 débute en 20, alors que l'avion est au sol et que le moteur démarre. Ensuite, à l'étape 21, le module 14 détermine si un colmatage est détecté par le module 13.

Si aucun colmatage n'est détecté à l'étape 21, le module 14 passe directement à l'étape 23 décrite ultérieurement.

Par contre, si un colmatage est détecté, le module 14 détermine, à l'étape 22, qu'il s'agit d'un colmatage normal ou extrême. En effet, comme expliqué précédemment en référence à la figure 2, le givre ne peut pas provoquer de colmatage pendant la phase P1. Ainsi, le module 14 envoie un message indiquant le colmatage et la nécessité d'une opération de maintenance. Ce message est par exemple envoyé vers un afficheur du poste de pilotage et/ou vers une mémoire qui mémorise cette information en vue d'une maintenance.

Lorsque le pilote constate, grâce à l'afficheur, qu'un colmatage est détecté, la procédure normale est d'avorter le décollage et de remplacer le filtre. Il n'est pas nécessaire de différencier entre un colmatage normal et un colmatage extrême car dans les deux cas une opération de maintenance est nécessaire. Une inspection visuelle permet alors de différencier entre un colmatage normal et un colmatage extrême.

Ensuite, à l'étape 23, le module 14 teste si une condition de passage à la phase P2 est vérifiée. Par exemple, la condition de passage à la phase P2 est vérifiée lorsque la vitesse de l'avion est supérieure à une vitesse seuil ou, lorsque l'indicateur de la vitesse de l'avion est défectueux, si l'indicateur WOW (pour « *Wheight On Wheel*») des trains d'atterrissage de l'avion, connu de l'homme du métier, indique que l'avion n'est plus au sol.

Si la condition de passage à la phase P2 n'est pas vérifiée, le module 14 boucle à l'étape 21. Dans le cas contraire, si la condition de passage à la phase P2 est vérifiée, le module 14 passe à l'étape 24.

Les étapes 24 à 30' correspondent donc à la phase P2.

A l'étape 24, le module 14 détermine si un colmatage est détecté par le module 13.

Comme l'étape 24 suit directement le passage à la phase P2, un colmatage détecté à l'étape 24 correspond à un colmatage qui avait déjà été détecté à l'étape 21 de la phase P1. Il s'agit donc d'un colmatage normal ou extrême, comme expliqué précédemment. Dans ce cas, à l'étape 25 le module 14 envoie un message indiquant le colmatage comme à l'étape 22. Ensuite, le module 14 passe à l'étape 30.

A l'étape 30, le module 14 teste si une condition de passage à la phase P3 est vérifiée. Par exemple, la condition de passage à la phase P3 est vérifiée lorsque le débit injecté dans la chambre de combustion 6 est inférieur à un débit seuil (débit de montée) ou, lorsque l'indicateur du débit injecté est défectueux, si le débit injecté indiqué par un capteur de l'avion est inférieur au même débit seuil. En cas de panne également sur le débit injecté indiqué par le capteur avion, la condition de l'étape 30 est systématiquement vérifiée.

Selon le résultat du test de l'étape 30, le module 14 boucle à l'étape 24 ou passe à l'étape 31 de la phase P3.

Si, à l'étape 24, aucun colmatage n'est détecté, le module passe à l'étape 26. Un colmatage détecté pendant la suite de la phase P2 n'est alors plus un colmatage qui avait déjà été détecté dans la phase P1. Comme expliqué précédemment, il s'agit donc d'un colmatage par le givre ou d'un colmatage extrême.

A l'étape 26, le module 14 détermine si un colmatage est détecté par le module 13. Si aucun colmatage n'est détecté, le module 14 passe à l'étape 30' décrite ultérieurement. Si un colmatage est détecté, le module 14 passe à l'étape 27.

A l'étape 27, le module 27 détermine si le filtre 3 est en présence de conditions givrantes. Par exemple, la température T du carburant dans le filtre 3 est comparée à un seuil Tg de conditions givrantes.

En l'absence de conditions givrantes, cela signifie que le colmatage détecté à l'étape 26 est un colmatage extrême, comme expliqué précédemment. Ainsi, à l'étape 28, le module 14 détermine que le colmatage détecté est un colmatage extrême et envoie un message correspondant indiquant la nécessité d'une opération de maintenance. Le message de l'étape 28 est différent de ceux des étapes 22 et 25 pour préciser qu'il concerne un colmatage extrême. Un tel message de criticité plus élevée en cas de colmatage extrême donne l'opportunité aux compagnies aériennes de définir des actions pilote plus adaptées, visant par exemple à éviter un risque d'ouverture de la vanne 5.

Par contre, en présence de conditions givrantes, le colmatage détecté à l'étape 26 peut être un colmatage extrême ou un colmatage par le givre, comme expliqué précédemment. Dans ce cas, à l'étape 29, le module 14 déclenche une minuterie de temporisation qui permettra, pendant la phase P3, de différencier entre les deux cas.

Après l'étape 26, 28 ou 29, le module 14 teste, à l'étape 30', si une condition de passage à la phase P3 est vérifiée. La condition de l'étape 30' peut être la même que celle de l'étape 30. Selon le résultat du test de l'étape 30', le module 14 boucle à l'étape 26 ou passe à l'étape 31 de la phase P3.

Les étapes 31 à 34' correspondent donc à la phase P3.

A l'étape 31, le module 14 détermine si un colmatage est détecté par le module 13. Si, à l'étape 31, aucun colmatage n'est détecté, le module 14 passe à l'étape 35. Par contre, si un colmatage est détecté, le module 14 passe à l'étape 32.

Comme l'étape 31 suit directement le passage à la phase P3, un colmatage détecté à l'étape 31 correspond à un colmatage qui avait déjà été détecté à l'étape 24 ou 26 de la phase P2. Dans ce cas, à l'étape 32, le module 14 vérifie l'état de la minuterie mentionnée précédemment en référence à l'étape 29.

Si la minuterie a été déclenchée mais n'a pas expirée, cela signifie que l'étape 29 a été exécutée mais que la durée de détection d'un colmatage est, pour l'instant, inférieure à la durée de temporisation de la minuterie. Le module 14 détermine donc, pour l'instant, que le colmatage peut être un colmatage extrême ou un colmatage par du givre et boucle à l'étape 31. Aucun message n'est envoyé.

Si la minuterie n'a pas été enclenchée, cela signifie que l'étape 29 n'a pas été exécutée et que le colmatage détecté n'est donc pas un colmatage par du givre. Si la minuterie a été déclenchée et a expirée, cela signifie que l'étape 29 a été exécutée et que la durée de détection d'un colmatage est supérieure à la durée de temporisation de la minuterie.

Dans ces deux cas, le module 14 détermine, à l'étape 33, que le colmatage est un colmatage extrême et envoie un message correspondant. Le message de l'étape 33 est par exemple le même que le message de l'étape 28.

Ensuite, le module 14 passe à l'étape 34.

A l'étape 34, le module 14 teste si une condition de passage à la phase P4 est vérifiée. Par exemple, la condition de passage à la phase P4 est vérifiée lorsque le débit injecté dans la chambre de combustion 6 est inférieur à un autre débit seuil (débit de descente) ou, lorsque l'indicateur du débit injecté est défectueux, si le régime du moteur est inférieur au régime seuil (régime de descente). En cas de panne également de la mesure de régime, la condition de l'étape 30 est systématiquement non vérifiée.

Selon le résultat du test de l'étape 34, le module 14 boucle à l'étape 31 ou passe à l'étape 37 de la phase P4.

En cas de colmatage par le givre détecté lors de l'étape 26, la minuterie est enclenchée à l'étape 29 de la phase P2. Ensuite, pendant la phase P3, le module 14 boucle sur les étapes 31 et 32. Comme expliqué précédemment, la température du carburant augmente progressivement et, après un certain temps inférieur à la durée de temporisation de la minuterie, le colmatage n'est plus détecté. Dans ce cas, l'étape 31 conduit alors à l'étape 35.

Un colmatage détecté pendant la suite de la phase P3 n'est donc pas un colmatage qui avait déjà été détecté dans la phase P2. Comme expliqué précédemment, il s'agit donc d'un colmatage extrême.

A l'étape 35, le module 14 détermine si un colmatage est détecté par le module 13. Si aucun colmatage n'est détecté, le module 14 passe à l'étape 34' décrite ultérieurement. Si un colmatage est détecté, le module 14 passe à l'étape 36.

A l'étape 36, le module 14 détermine donc que le colmatage détecté est un colmatage extrême et envoie un message correspondant. Le message de l'étape 36 est par exemple le même que celui des étapes 28 et 33.

Après l'étape 35 ou 36, le module 14 teste, à l'étape 30', si une condition de passage à la phase P4 est vérifiée. La condition de l'étape 34' peut être la même que celle de l'étape 34. Selon le résultat du test de l'étape 34', le module 14 boucle à l'étape 35 ou passe à l'étape 37 de la phase P4.

Les étapes 37 à 39 correspondent à la phase P4.

A l'étape 37, le module 14 détermine si un colmatage est détecté par le module 13.

Si aucun colmatage n'est détecté à l'étape 37, le module 14 passe directement à l'étape 39 décrite ultérieurement.

Par contre, si un colmatage est détecté, le module 14 détermine, à l'étape 38, qu'il s'agit d'un colmatage normal ou extrême. En effet, comme expliqué précédemment en référence à la figure 2, ces types de colmatage peuvent être détectés pendant la phase P4. Ainsi, le module 14 envoie un message indiquant le colmatage. Ce message est par exemple le même que celui de l'étape 22.

Ensuite, à l'étape 39, le module 14 teste si une condition de passage à la phase P1 est vérifiée. Par exemple, la condition de passage à la phase P1 est vérifiée lorsque le débit injecté est inférieur à un seuil de débit minimal ou lorsque le levier maître de l'avion (« Master Lever ») est en position OFF. Lorsque l'indicateur de débit injecté est défectueux, la condition est également vérifiée si le régime du moteur est inférieur à un autre régime seuil (régime minimal). En cas de panne également de l'indicateur de régime, la condition de l'étape 39 est systématiquement vérifiée.

Si la condition de passage à la phase P1 n'est pas vérifiée, le module 14 boucle à l'étape 37. Dans le cas contraire, si la condition de passage à la phase P1 est vérifiée, le module 14 boucle à l'étape 21.

On constate donc que le module 14 permet de déterminer le type d'un colmatage détecté par le module 13, en fonction de la phase courante, et d'envoyer un message d'indication en fonction du type de colmatage. Notamment, si la phase courante est une phase pendant laquelle un colmatage peut être provoqué par le givre (phase P2 et P3), le module 14 permet de différencier entre un colmatage extrême et un colmatage par le givre. En cas de colmatage par le givre, le module 14 n'envoie pas de message indiquant qu'une opération de maintenance est nécessaire. Ainsi, il est possible d'éviter des opérations de maintenance inutiles.

Les étapes 23, 30, 30', 34, 34' et 39 permettent de détecter la phase courante. Les étapes décrites précédemment en référence à chaque phase permettent de déterminer le type de colmatage en fonction de la phase courante.

Comme expliqué précédemment, l'ouverture de la vanne 5 peut être détectée et indiquée au pilote par le module 13, par exemple lorsque la perte de charge du filtre dépasse un seuil d'ouverture, supérieur au seuil de pré-colmatage utilisé pour détecter un colmatage imminent. La description qui précède concerne un avion dans lequel le circuit aval au filtre 3 est capable de supporter l'ouverture de la vanne 5 en conditions givrantes.

Dans le cas d'un avion dans lequel le circuit aval au filtre 3 est endommagé par l'ouverture de la vanne 5 en conditions givrantes, l'ouverture de la vanne 5 provoque l'envoi d'un message indiquant qu'une opération de maintenance est nécessaire, même en cas de détermination que le colmatage est un colmatage par le givre.

## Revendications

1. Procédé de surveillance d'un filtre (3) du circuit d'alimentation (1) en carburant d'un moteur d'aéronef, comprenant :
- une étape de détection d'un colmatage du filtre, et
- une étape (22, 25, 28, 33, 38) d'envoi d'un message d'indication indiquant une nécessité d'une opération de maintenance, **caractérisé en ce qu'**il comprend :
- une étape de définition d'une pluralité de phases successives (P1, P2, P3, P4) d'une mission de l'aéronef, comprenant au moins une phase (P1, P4) pendant laquelle le colmatage du filtre n'est pas susceptible d'être causé par le givre et une phase (P2, P3) pendant laquelle le colmatage du filtre est susceptible d'être causé par le givre,
- une étape de détermination d'une phase courante parmi ladite pluralité de phases successives, et
- en réponse à la détection d'un colmatage du filtre, une étape de détermination d'un type de colmatage en fonction de ladite phase courante permettant de différencier entre un colmatage normal, un colmatage extrême et un colmatage par le givre,
dans lequel, lors de l'étape d'envoi d'un message d'indication , le message envoyé indique la nécessité de maintenance, type de colmatage déterminé dans ladite phase courante est un colmatage normal ou extrême.

2. Procédé de surveillance selon la revendication 1, dans lequel, lorsque la phase courante est une phase (P2) pendant laquelle le colmatage du filtre est susceptible d'être causé par le givre, l'étape de détermination d'un type de colmatage comprend une étape (27) de test de conditions givrantes.

3. Procédé de surveillance selon la revendication 2, comprenant, après ladite étape de test de conditions givrantes, si lesdites conditions givrantes sont vérifiées, une étape (29, 32) de mesure d'une durée de détection pendant laquelle un colmatage est détecté, dans lequel :
- si la durée détection est supérieure à une durée de temporisation prédéterminée, le type de colmatage déterminé est un colmatage extrême et le message d'indication envoyé indique la nécessité de maintenance,
- si la durée de détection est inférieure à la durée de temporisation, le type de colmatage déterminé est un colmatage par le givre et aucun message d'indication indiquant une nécessité de maintenance n'est envoyé.

4. Procédé de surveillance selon la revendication 2, dans lequel, après ladite étape (27) de test de conditions givrantes, si lesdites conditions givrantes ne sont pas vérifiées, le type de colmatage déterminé est un colmatage extrême et le message d'indication envoyé indique la nécessité de maintenance.

5. Procédé de surveillance selon la revendication 1, dans lequel, lorsque la phase courante est une phase pendant laquelle le colmatage du filtre n'est pas susceptible d'être causé par le givre, le type de colmatage déterminé est un colmatage normal ou extrême et le message d'indication envoyé indique la nécessité de maintenance.

6. Procédé de surveillance selon l'une des revendications 1 à 5, dans lequel l'étape de détermination d'une phase courante comprend au moins une étape (23, 30, 30', 34, 34', 39) de test pour vérifier une condition de passage vers une phase suivante.

7. Procédé de surveillance selon l'une des revendications 1 à 6, dans lequel lesdites phases successives comprennent une première phase (P1) pendant laquelle l'avion est au sol avant le décollage, une deuxième phase (P2) pendant laquelle l'avion décolle, une troisième phase (P3) pendant laquelle l'avion est en vol, et une quatrième phase (P4) pendant laquelle l'avion est au sol après atterrissage.

8. Programme d'ordinateur comprenant des instructions pour la mise en oeuvre du procédé de surveillance selon l'une des revendications 1 à 7 lorsque le programme est exécuté par un ordinateur.

9. Unité électronique (7) pour la commande d'une turbomachine, ladite unité électronique comprenant une mémoire (9) contenant un programme d'ordinateur selon la revendication 8.

10. Moteur d'aéronef comprenant une turbomachine et une unité électronique (7) selon la revendication 9.

## Patentansprüche

1. Verfahren zur Überwachung eines Filters (3) des Treibstoffversorgungskreises (1) eines Flugzeugtriebwerks, umfassend:
- einen Schritt des Erfassens einer Verstopfung des Filters und
- einen Schritt (22, 25, 28, 33, 38) des Sendens einer Anzeigemeldung, die eine Notwendigkeit eines Instandhaltungsvorgangs anzeigt,
**dadurch gekennzeichnet, dass** es umfasst
- einen Schritt des Definierens einer Vielzahl von aufeinanderfolgenden Phasen (P1, P2, P3, P4) einer Mission des Flugzeugs, umfassend wenigstens eine Phase (P1, P4), während der die Verstopfung des Filters nicht durch Reif verursacht werden kann, und eine Phase (P2, P3), während der die Verstopfung des Filters durch Reif verursacht werden kann,
- einen Schritt des Bestimmens einer aktuellen Phase aus der Vielzahl von aufeinanderfolgenden Phasen und,
- als Reaktion auf die Erfassung einer Verstopfung des Filters, einen Schritt des Bestimmens eines Verstopfungstyps in Abhängigkeit von der aktuellen Phase, der ermöglicht, zwischen einer normalen Verstopfung, einer extremen Verstopfung und einer Verstopfung durch Reif zu differenzieren,
wobei während des Schrittes des Sendens einer Anzeigemeldung die gesendete Meldung die Instandhaltungsnotwendigkeit anzeigt, wenn der in der aktuellen Phase bestimmte Verstopfungstyp eine normale oder extreme Verstopfung ist.

2. Überwachungsverfahren nach Anspruch 1, wobei, wenn die aktuelle Phase eine Phase (P2) ist, während der die Verstopfung des Filters durch Reif verursacht werden kann, der Schritt des Bestimmens eines Verstopfungstyps einen Schritt (27) des Prüfens von Vereisungsbedingungen umfasst.

3. Überwachungsverfahren nach Anspruch 2, umfassend nach dem Schritt des Prüfens von Vereisungsbedingungen, wenn die Vereisungsbedingungen erfüllt sind, einen Schritt (29, 32) des Messens einer Erfassungsdauer, während der eine Verstopfung erfasst wird,
wobei:
- wenn die Erfassungsdauer größer als eine vorbestimmte Verzögerungsdauer ist, der bestimmte Verstopfungstyp eine extreme Verstopfung ist und die gesendete Anzeigemeldung die Instandhaltungsnotwendigkeit anzeigt,
- wenn die Erfassungsdauer kleiner als die Verzögerungsdauer ist, der bestimmte Verstopfungstyp eine Verstopfung durch Reif ist und keine Anzeigemeldung, welche eine Instandhaltungsnotwendigkeit anzeigt, gesendet wird.

4. Überwachungsverfahren nach Anspruch 2, wobei nach dem Schritt (27) des Prüfens von Vereisungsbedingungen, wenn die Vereisungsbedingungen nicht erfüllt sind, der bestimmte Verstopfungstyp eine extreme Verstopfung ist und die gesendete Anzeigemeldung die Instandhaltungsnotwendigkeit anzeigt.

5. Überwachungsverfahren nach Anspruch 1, wobei, wenn die aktuelle Phase eine Phase ist, während der die Verstopfung des Filters nicht durch Reif verursacht werden kann, der bestimmte Verstopfungstyp eine normale oder extreme Verstopfung ist und die gesendete Anzeigemeldung die Instandhaltungsnotwendigkeit anzeigt.

6. Überwachungsverfahren nach einem der Ansprüche 1 bis 5, wobei der Schritt des Bestimmens einer aktuellen Phase wenigstens einen Prüfschritt (23, 30, 30', 34, 34', 39) umfasst, um eine Übergangsbedingung zu einer nächsten Phase festzustellen.

7. Überwachungsverfahren nach einem der Ansprüche 1 bis 6, wobei die aufeinanderfolgenden Phasen eine erste Phase (P1), während der sich das Flugzeug vor dem Start am Boden befindet, eine zweite Phase (P2), während der das Flugzeug abhebt, eine dritte Phase (P3), während der sich das Flugzeug im Flug befindet, sowie eine vierte Phase (P4) umfassen, während der sich das Flugzeug nach der Landung am Boden befindet.

8. Computerprogramm, umfassend Befehle für die Durchführung des Überwachungsverfahrens nach einem der Ansprüche 1 bis 7, wenn das Programm durch einen Computer ausgeführt wird.

9. Elektronische Einheit (7) zum Steuern einer Turbomaschine, wobei die elektronische Einheit einen Speicher (9) aufweist, der ein Computerprogramm nach Anspruch 8 enthält.

10. Flugzeugtriebwerk, umfassend eine Turbomaschine und eine elektronische Einheit (7) nach Anspruch 9.

## Claims

1. A monitoring method for monitoring a filter (3) of a feed circuit (1) for feeding an aircraft engine with fuel, the method comprising:
• a step of detecting clogging of the filter; and
• a step (22, 25, 28, 33, 38) of issuing an indication message indicating a need for maintenance;
the method being **characterized in that** it comprises:
• a step of defining a plurality of successive stages (P1, P2, P3, P4) of a mission of the aircraft, comprising at least a stage (P1, P4) during which clogging of the filter is not capable of being caused by ice, and a stage (P2, P3) during which clogging of the filter might be caused by ice;
• a step of determining a current stage from among said plurality of successive stages; and
• in response to detecting clogging of the filter, a step of determining the type of clogging as a function of said current stage;
wherein during the step of issuing an indication message, the message that is issued indicates the need for maintenance if the type of clogging determined within said current stage is a normal or extreme clogging.

2. A monitoring method according to claim 1, wherein, when the current stage is a stage (P2) during which clogging of the filter might be caused by ice, the step of determining a type of clogging includes a step (27) of testing for icing conditions.

3. A monitoring method according to claim 2, including, after said step of testing for icing conditions, and if said icing conditions are found to exist, a step (29, 32) of measuring a detection duration during which clogging has been detected, wherein:
• if the detection duration is longer than a predetermined time-out duration, the type of clogging is determined to be extreme clogging and the indication message that is issued indicates that maintenance is necessary; and
• if the detection duration is shorter than the time-out duration, the type of clogging is determined as being ice clogging and no indication message indicating the need for maintenance is issued.

4. A monitoring method according to claim 2, wherein, after said step (27) of testing for icing conditions, if said icing conditions are found not to exist, the type of clogging is determined as being extreme clogging and the indication message issued indicates the need for maintenance.

5. A monitoring method according to claim 1, wherein, when the current stage is a stage during which clogging of the filter cannot be caused by ice, the type of the clogging is determined to be normal clogging or extreme clogging and the indication message that is issued indicates the need for maintenance.

6. A monitoring method according to any one of claims 1 to 5, wherein the step of determining a current stage includes at least one step (23, 30, 30', 34, 34', 39) of testing a condition for passing on to a following stage.

7. A monitoring method according to any one of claims 1 to 6, wherein said successive stages comprise a first stage (P1) during which the aircraft is on the ground prior to takeoff, a second stage (P2) during which the aircraft is taking off, a third stage (P3) during which the aircraft is in flight, and a fourth stage (P4) during which the aircraft is on the ground after landing.

8. A computer program including instructions for implementing a monitoring method according to any one of claims 1 to 7 when the program is executed by a computer.

9. An electronic unit (7) for controlling a turbine engine, said electronic unit having a memory (9) containing a computer program according to claim 8.

10. An aircraft engine comprising a gas turbine and an electronic unit (7) according to claim 9.
